# EUROPEAN PATENT APPLICATION

(11) **EP 1 575 002 A1**
(43) Date of publication of application: **14.09.2005**
(21) Application number: 04251411.7
(22) Date of filing: 11.03.2004
(51) Int. Cl.: G07D 7/00, G06K 9/62

(54) **Bank note simulation**

(71) Applicant: De La Rue International Limited, Basingstoke, Hampshire RG22 4BS (GB)
(72) Inventor: Bachmann, Franz, CH-3400 Burgdorf (CH); Bäni, Werner, CH-3400 Burgdorf (CH); Fankhauser, Thomas, CH-3011 Bern (CH); Heigold, Georg, 52072 Aachen (DE); Klock, Hansjörg, CH-3113 Rubigen (CH); Steger, Jean-Pierre, CH-3063 Ittigen (CH)
(74) Representative: Skone James, Robert Edmund

(57) **Abstract**

In order to train a bank note classifier such as for example present in a cash handling device, a plurality of electronic representations of bank notes are needed. To provide such representations in a fast and cost effective way, a reference bank note (1) is scanned (5) and a reference dataset (2) is generated. In a step defect simulation (6), a plurality of electronic datasets (4) is generated by taking a particular dataset (2) either from the scanner or from a reference library (3) and simulating one or several defects of the bank note such as for example dog-ears, folds, missing parts, soil, abrasion and/or many more. In the simulation step (6) a priori knowledge (8) about the different defects and/or the reference bank note may be considered. The electronic datasets (4) which represent virtual defective bank notes are stored in a database (7). A classifier may then be trained with these virtual defective bank notes.

## Description

### Technical Field

The invention relates to a method for generating an electronic dataset as a representation of a sheet-like object, said method including generating a reference dataset by scanning a reference object. The invention further relates to an arrangement for generating an electronic dataset as a representation of a sheet-like object, said arrangement including means for generating a scan of a reference object and means for generating a reference dataset from said scan. The invention further relates to a corresponding electronic dataset, to a method for training a device for classifying real bank notes and a device for classifying real bank notes.

### Background Art

In the processing of sheet-like objects such as for example bank notes, cheques or other security or commercial papers, a test of said objects is often carried out. Such a test may include an authenticity test, that is a test whether the object is a counterfeit or not and an identity test where it is determined, what type of object it is and which value it has. It may also include a decision regarding the condition of the sheet-like object, often referred to as fitness. These tests are typically carried out by a device that first generates some kind of image of the object by scanning it with a particular sensor, for instance an optical or magnetic sensor. Then this image is analysed and the required tests are carried out based on this analysis. In some cases, it is rather difficult to carry out these tests accurately, because the sheet-like objects may be in a bad state, that is they may be soiled, they may have dog-ears, folds or other defects.

In order to carry out the desired tests accurately, the device has to be trained specifically for these tests. That is the internal parameters of the device have to be set to fulfil a given task as accurate as required. Up to now, the device is trained to carry out a particular test by scanning a plurality of sheet-like objects the properties of which with respect to a particular defect are known. Based on the scans of these objects, that is based on an electronic representation of each of these objects, the device is modified so as to best reproduce the expected results of the tests.

Typically, hundreds or even thousands of sheet-like objects have to be scanned to train the device in order to detect a defective object or to identify an object accurately. This procedure is not only time consuming, it is also very expensive because a lot of real sheet-like objects have to be scanned to train the device. The samples preferably include faultless sheet-like objects as well as sheet-like objects with different defects. A further drawback is that one cannot even be sure that the device is trained reliably, because one may not know whether the device has been trained with a representative selection of samples.

### Summary of the invention

It is therefore an object of the invention to create a method pertaining to the technical field initially mentioned, that enables a fast, simple and inexpensive generation of a plurality of electronic representations of sheet-like objects.

The solution of the invention is specified by the features of claim 1. According to the invention, the method for generating an electronic dataset as a. representation of a sheet-like object includes the steps of generating a reference dataset by scanning a reference object and generating said electronic dataset by simulating a physical defect of the reference object where said physical defect is simulated by applying mathematical methods to the reference dataset via electronic data processing.

The invention enables the generation of a multitude of datasets, that is a multitude of representations of a certain sheet-like object, for example a particular bank note of a particular currency, a cheque of a particular bank or other types of security or commercial papers.

By varying the simulation of a particular physical defect and/or the type of the simulated defect, the invention enables the generation of a multitude of datasets, that is a multitude of representations of a sheet-like object. Therefore, only one reference sheet-like object of a particular sheet-like object is needed to produce hundreds, thousands or any other number of representations of a particular sheet-like object having different defects and/or different variations of the same defect.

Since only one reference object of a particular sheet-like object is needed, the method of training the device for testing the sheet-like objects is much less expensive than the known method. The method according to the invention is also much faster since only one reference object has to be scanned and since the representations are generated automatically by data processing. Furthermore, this method is much more reliable because the invention enables the simulation of any desired defect and even any desired combination of defects as well as the simulation of faultless sheet-like objects.

To simplify the terminology, the term "virtual sheet-like object" is used throughout the description instead of the term "an electronic dataset as a representation of a sheet-like object". For example, the term "virtual bank note" is used instead of the term "an electronic dataset as a representation of a bank note".

In order to produce the reference dataset basically any object of a particular type could be scanned. However, the better the state of the reference object, that is the less defects the reference object has, the better the reference dataset turns out. Hence, a mint reference object without any print irregularities such as for example a bank note directly from the print-work is preferred.

For simulating some defects such as for example print irregularities, it would be sufficient to scan only one surface of the reference object to generate the reference dataset. Other defects such as for example dog-ears require knowledge of both surfaces of the reference object. So, in a preferred embodiment of the invention, both surfaces of the reference object are scanned to generate the reference dataset.

A particular need for testing the authenticity, identity and/or fitness of sheet-like objects exists in the field of currency handling, particularly the processing of bank notes. Therefore, it is preferred that the sheet-like object is a bank note and that the electronic dataset is generated as a representation of a bank note. Without the intention to restrict the scope of protection of the claims and unless otherwise mentioned, the narrower term "bank note" is used throughout the rest of the description instead of the more general term "sheet-Nke object".

In order to simulate a particular physical defect some information is required about this defect. If for example a dog-ear has to be simulated, then some information regarding a typical position and a typical length of the dog-ear is needed. These information could for example be obtained by defining them randomly, for example as a particular fraction of the bank note length. In order to more realistically simulate the defects, these information are preferably obtained based on an analysis of a plurality of real bank notes having said defect. In our example, a plurality of dog-ears of real bank notes is analysed and based on this analysis, a typical range of values for the required parameters is identified. In a further preferred embodiment, a probability distribution for the parameter values is defined.

Sheet-like objects and particularly bank notes may have a lot of different defects. For providing a plurality of virtual bank notes, at least one of the following defects is simulated:
a) a bank note with a dog ear;
b) a bank note with a fold;
c) a bank note where a printing on a surface of the object is displaced in relation to an edge of the object, a so called cut-to-print defect;
d) a bank note with a hole;
e) a bank note with a missing part of an edge of the object;
f) a bank note where a printing on a surface of the object is displaced in relation to another printing on said surface of the object, a so called print-to-print defect;
g) a bank note with graffiti on a surface;
h) a uniformly soiled bank note;
i) a locally soiled bank note;
j) a bank note with a stain;
k) a bank note with a frayed edge;
I) a bank note with a tear;
m) a bank note with a patched tear;
n) a crumpled bank note;
o) a bank note showing abrasion.

Preferably, a combination of several of these defects is simulated where a particular defect may occur several times. A simulated bank note may for example have the following defects: it is crumpled, uniformly soiled, has a cut-to-print defect and two dog-ears.

As outlined above, the virtual bank notes are preferably used for training devices that classify real bank notes with respect to one or a plurality of given criteria such as for example authenticity, identity and/or fitness. Subsequently such devices are called classifiers. Other applications of virtual bank notes include for example the testing of classifiers after training or the analysis of sensors for bank note scanning.

With the goal to have a classifier that is capable of reliably classifying real bank notes, it is advantageous to train it with a plurality of different virtual bank notes. It is therefore also advantageous to generate a plurality of virtual bank notes by simulating a plurality of physical defects. These may include a plurality of different physical defects and/or a plurality of variations of the same physical defect as well as combinations thereof.

As aforementioned, a classifier scans a real bank note (or a counterfeit bank note) and then classifies it according to one or a plurality of given criteria. The scanning of the bank note is carried out with a specific sensor. Since a virtual bank note is used as a simulation of a real bank note scanned with that specific sensor, the virtual bank note is preferably simulated, that is generated depending on the properties of that specific sensor.

In this manner, better classification results may be obtained compared to the cases where the characteristics and properties of the sensor were not considered when the virtual bank notes were generated.

For further improving the reliability of the classifier, the reference object is not only scanned in a single spectral region but in a plurality of spectral regions to generate the virtual bank notes. These spectral regions may include any portion of the whole electromagnetic spectrum. Preferably it includes portions of the visible spectral region as well as portions of the infrared and ultraviolet spectral regions.

Often, the sensor for scanning the real bank notes in a classifier work in a specific spectral region. So the generation of the virtual bank notes for training such a classifier is carried out in dependency of the scans of the reference bank note in the corresponding spectral region or regions. By generating a multispectral representation of the reference object, a sensor-independent representation of the reference is enabled. In this case, sensor-independent virtual bank notes are generated where the sensor-dependent modification of the virtual bank notes follows in a separate step. At this stage, this may be done simultaneously for all desired sensors.

The arrangement according to the invention is specified by the features of claim 11. According to the invention, the arrangement for generating an electronic dataset as a representation of a sheet-like object includes means for generating a scan of a reference object, means for generating a reference dataset from said scan and means for simulating a physical defect of the reference object where said means for simulating a physical defect include means for applying mathematical methods to the reference dataset via electronic data processing.

In a preferred embodiment of the invention, the arrangement includes a device, particularly a classifier, for classifying a real bank note with respect to one or a plurality of given criteria such as for example authenticity, identity and/or fitness. In order to train the classifier accurately the arrangement also includes means for training the classifier with said electronic dataset.

The electronic dataset according to the invention is specified by the features of claim 13. According to the invention, the electronic dataset as a representation of a sheet-like object is generated with the method as described above.

The method for training a device for classifying real bank notes according to the invention is specified by the features of claim 14. According to the invention, this method includes the step of training the device with a plurality of electronic datasets generated as described above.

The device for classifying real bank notes, that is a classifier, according to the invention is specified by the features of claim 15. According to the invention, the classifier for classifying real bank notes with respect to one or a plurality of given criteria has been trained as described above. That is it has been trained with a plurality of electronic datasets generated with the method as described above.

Other advantageous embodiments and combinations of features come out from the detailed description below and the totality of the claims.

### Brief description of the drawings

The drawings used to explain the embodiments show:
- Fig. 1: A block diagram of the method according to the invention;
- Fig. 2: a block diagram of the defect extraction from real bank notes into a library;
- Fig. 3: a block diagram of the defect modelling based on the knowledge library and the generation of the virtual bank notes with defects;
- Fig. 4: a directed acyclic graph representing the parameter distribution of the defect simulation;
- Fig. 5: schematic illustrations of a reference bank note and a plurality of defective bank notes;
- Fig. 6: a schematic illustration of a correct and a defective print on a bank note;
- Fig. 7: schematic colour histograms for a new and an old bank note;
- Fig. 8: a schematic illustration of the simulation of a tear;
- Fig. 9: a block diagram of a classifier that is trained with the virtual bank notes and
- Fig. 10: a block diagram of a further embodiment of the invention.

In the figures, the same components are given the same reference symbols.

### Preferred embodiments

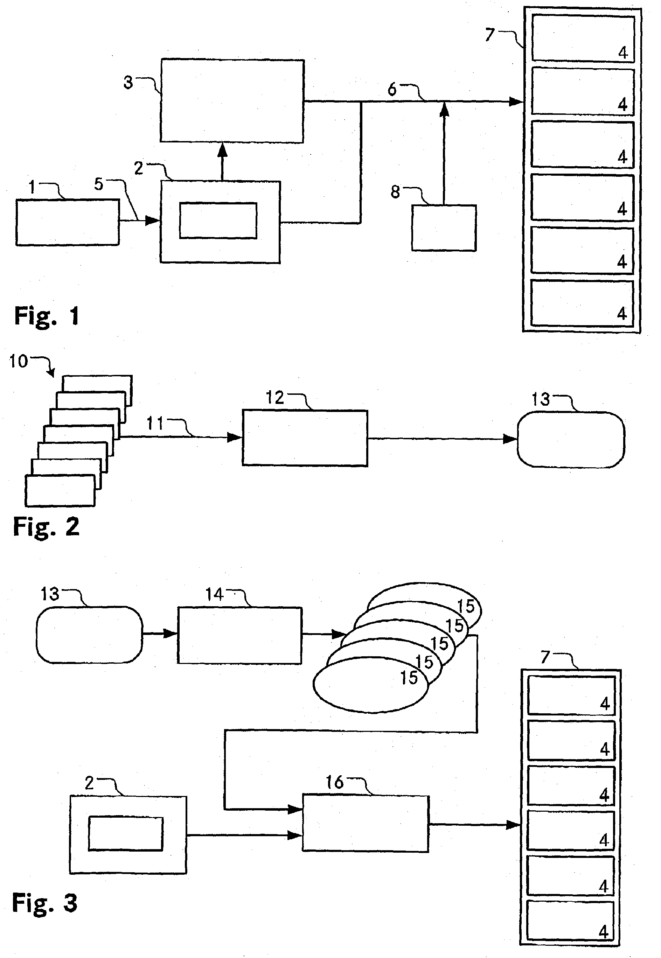

Figure 1 shows a block diagram of the method according to the invention. A reference 1, here a bank note is scanned in a step scanning 5 to generate a reference dataset 2 which is electronically stored to a reference library 3. Typically the reference bank note is a real and new bank note that has no defects and no print irregularities. From a particular reference dataset 2 that is typically taken from the reference library 3 or that may also be taken directly from the scanning device, several electronic datasets 4 are generated in a step defect simulation 6 and stored in a database 7. Each electronic dataset 4 thereby is a representation of a virtual bank note that has no, one or several defects. For simulating a defective bank note, the defect simulation 6 is based on a priori knowledge 8 that is incorporated in the simulation algorithms.

The a priori knowledge 8 may for example include information about how a particular defect may be realistically simulated as well as information about the properties and characteristics of a classifier that will later be trained with the generated electronic datasets 4. How these information are obtained is shown in fig. 2. A plurality of real bank notes 10, that is bank notes with (and without) real defects is analysed in a step analysis 11. This is accomplished for example by scanning them with an appropriate sensor. Then follows the defect extraction 12, where the properties and characteristics of each defect to be simulated is extracted. This is for example done by image processing. The extracted information about a particular defect is then stored in a knowledge library 13.

Graffiti on a bank note is extracted based on an adaptive thresholding for example with a bayesian classifier. Once extracted, the graffiti is stored in the knowledge library 13.

Edges such as for example the edges of the note itself or the edges of holes and other missing parts of the bank note are extracted too with an adaptive thresholding together with some general knowledge on edges such as connectivity. Here, the proposed thresholds can for example come from a histogram approach, where the intensities of the edge image are represented in a histogram.

Textures such as local or homogeneous soil or crumpling are extracted by means of an absorption model. Here the paper background is subtracted from the textured bank note. The extracted texture samples are also stored in the knowledge library 13.

Abrasion is extracted by analysing the colour histogram of the bank note that is described hereinafter.

Since the basic processes in the development of geometrical defects such as for example folds, dog-ears or cut-to-print variations are relatively simple, these defects are directly modelled.

Additional information is stored in the knowledge library 13 too. For example contours and textures samples are stored and/or the statistical parameters used in the corresponding algorithms to simulate these defects. Also, sample colour histograms of notes showing abrasion and/or colour histograms of reference notes together with the parameters to calculate the abrasion colour histograms from the reference colour histograms are stored. Furthermore, several parameter distributions are stored in the knowledge library 13. These parameter distributions are important insofar as the defect simulation has to be stochastic. This means that the occurrence of the possible defects as well as the characteristics of a specific defect should be stochastically distributed in order to generate a representative set of virtual bank notes.

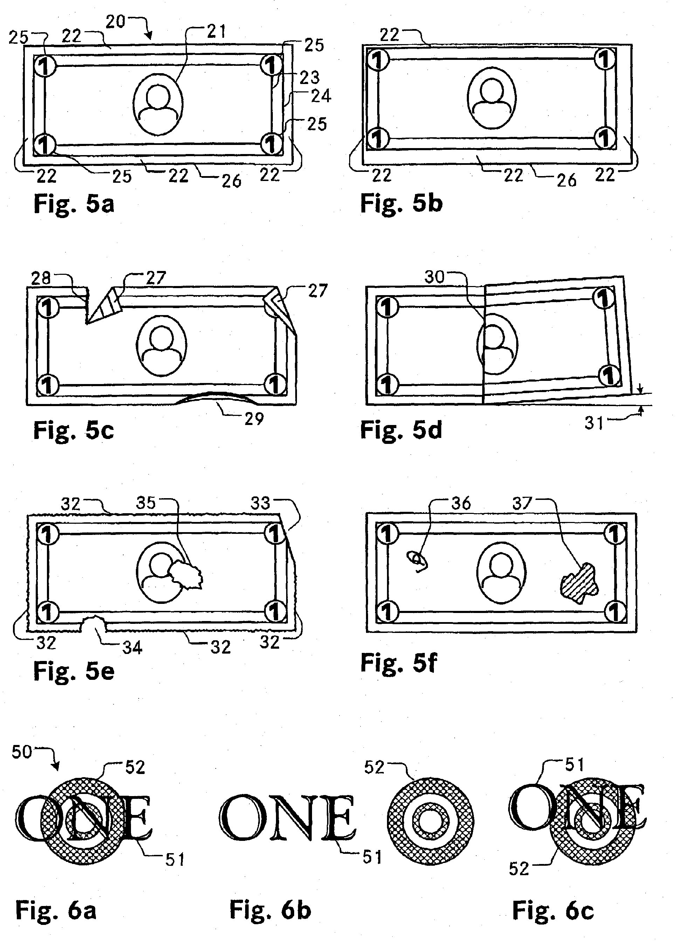

Therefore, the defect samples are simulated based on a joint probability distribution of all defect parameters where some of these parameters are strongly correlated and where others are not correlated at all. For a large number of defect parameters, it may be difficult to find such a joint probability distribution wherefore it could be replaced by an equivalent directed acyclic graph which is only possible for strictly positive joint distributions. In addition a nested graph such as the graph 100 shown in figure 4 may be used for further simplification. The graph 100 shows three top level nodes: the first node concerns print irregularities 101, the second node degradations 102 and the third node geometric defects 103.

The node print irregularities 101 includes the nodes print-to-print variations 110 and cut-to-print variations 111. The node degradations 102 includes the nodes homogeneous textures 112, local textures 113 and contours 114. The node geometric defects 103 includes the nodes inside geometric defects 115, corner geometric defects 116, margin geometric defects 117 and z-folds 118.

The node homogeneous textures 112 includes the nodes abrasion 120, crumpling 121 and soil 122. The node local textures 113 includes the nodes graffiti 1 123, graffiti2 124, stain 1 125 and stain2 126. The node contours 114 includes the nodes margin soil 127 and margin fraying 128. The node inside geometric defects 115 includes the nodes hole inside 129 and hole dog-ear 130. The node corner geometric defects 116 includes for each corner of a bank note the three nodes dog-ear 131, corner hole 132 and double dog-ear 133. The node margin geometric defects 117 includes for each edge of a bank note the four nodes margin dog-ear 134, tear dog-ear 135, hole margin 136 and margin fraying partial 137. The node z-folds 118 includes the nodes z-fold horizontal 138 and z-fold vertical 139.

The three top level nodes 101, 102 and 103 are considered independent. Their order, which is indicated by arrows, is imposed by conceptual and technical constraints. The print irregularities 101 for example are supposed to occur independently of the other defects. Homogeneous textures 112 and contours 114 typically depend on each other, because the note edge looks different for crumpled, soiled and rubbed off notes and because the degrees of textures and contours are coupled. For example, the more soiled the note is, the less intact the edges will be. Local textures 113 are believed to be independent of homogeneous textures 112 and contours 114. They include graffiti and stains which are only weakly linked. The order of the geometric defects 103 as indicated by the arrows is given by technical constraints.

In this graph, the random number generators of the single defects as represented by the innermost nodes of graph 100 are not shown. They are realised by parameterised multi-variate probability density functions where different sets of functions may be applied to simulate different degrees of defects and degradations.

In general, the various distributions are not known a priori. Therefore, the distributions have to be set based on the available knowledge about the defects to be simulated, the involved devices and the environment. Then, the distributions are adapted by trial and error.

Fig. 3 shows the defect modelling and the generation of the virtual bank notes. Based on the information stored in the knowledge library 13 the various defects 15 are modelled in a step modelling 14, for example by processing a method according to the nested graph 100 shown in figure 4. Then one or a plurality of defects 15 and a reference dataset 2 from the reference library or the scanner are processed so as to generate a virtual and possibly defective bank note that corresponds to the reference bank note that was the source of the particular reference dataset 2. If the simulated bank note has more than one defect, the various defects 15 are superposed in the step superposition 16. These steps are repeated several times where each time an electronic dataset 4 that represents a virtual bank note with one or a plurality of defects 15 is generated and stored in the database 7.

Fig. 5 and 6 show a plurality of different defects that can be simulated according to the invention. The defects can be classified into different defect types: print irregularities such as for example cut-to-print and print-to-print variations, geometrical defects such as for example dog ears, holes, frayed margins and different kinds of folds, global degradations such as for example abrasion, crumpling or homogeneous soil and local degradations such as for example partial soil (stain) or margin soil. In the following paragraphs, the various defects and their simulation are discussed.

Fig. 5a shows a schematic illustration of a reference bank note 20. It comprises an image 21 in the center, a margin 22 on each side of the note, a frame indicated by two lines 23, 24 and a value sign 25 of the bank note written as a big one with a circle around it in each corner thereof. All these items that are printed on a paper 26 are subsumed under the term printings.

Fig. 5b shows a cut-to-print variation which occurs, when the printings are not correctly aligned with the paper 26 of the bank note, i.e. the printing device is displaced or the paper 26 is displaced when the paper web on which the printings are printed is cut into the single notes. The result is that the margins 22 on the upper and the lower side as well as the margins 22 on the left and the right side of the bank note are not equally broad anymore. With bank notes that do not have a margin, the result is that a straight band of the note is missing on one edge while the according straight band of the next note is added on the opposite side. This defect is simulated by an affine transformation, i. e. a simple translation of the print image, or by cutting a straight band of the virtual note and pasting it on the opposite side of the note. The parameters for the simulation include for example the width of the cut band or position parameters such as for example a translation vector or some kind of coordinates.

Fig. 5c shows a virtual bank note with several defects: a simple dog-ear 27 at the upper right corner, a tear 28 with a dog-ear 27 at the upper edge and a curved fold 29 at the lower edge of the bank note. Dog-ears at a corner occur when the corner of the bank note is folded. It may only be folded once which results in a simple dog-ear 27 as shown, but it may also be folded twice resulting in a double dog-ear (not shown) or it may even be folded more times resulting in multiple dog-ears (not shown). Often, shading and soil occurs along the folding line. A dog-ear is simulated by concrete modelling, that is: cutting a triangle in a corner, generating the corresponding backside of the triangle, rotating it according to the cutting angle and pasting it to the remaining note. The parameters include for example the distances from the affected corner of the bank note to the intersections of the folding line with the edges of the bank note or an angle and a position of the folding line.

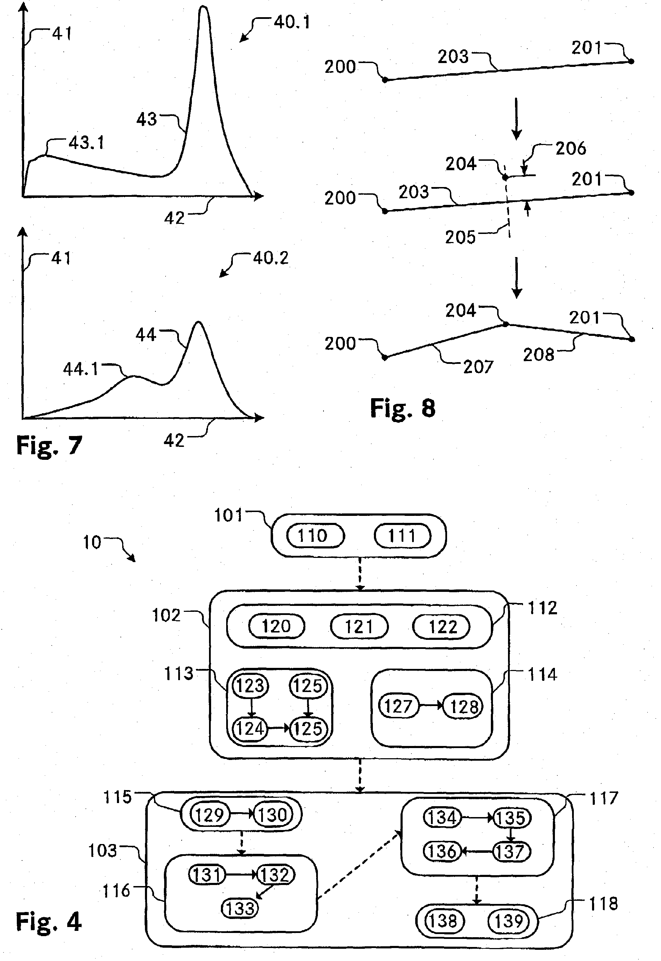

Many people fold bank notes either vertically or horizontally for putting them into a purse. Sometimes, a bank note partially tears along such a fold. A tear 28 such as shown in fig. 5c is simulated as a one-dimensional (1D) stochastic texture. This is for example done by a substitution rule as illustrated in fig. 8: first choose the initial point 200 and the end point 201 of the tear 28 either somewhere within the bank note or on one of its edges. Then choose a new point 204 on the perpendicular bisector 205 of the connecting section 203 at a distance 206 from the connecting section 203. Then substitute the connecting section 203 by the subsection 207 between the initial point 200 and the new point 204 and by the subsection 208 between the end point 201 and the new point 204. Then repeat this procedure with the subsections 207 and 208 as the connecting sections until sufficient accuracy is reached. The parameters for simulating a tear include for example the positions of the initial point 200 and the end point 201, the randomly chosen distances 206 and a criteria for the accuracy of the tear or the number of iterations to be carried out.

Often, a dog-ear such as the dog-ear 27 shown in fig. 5c occurs at one or both sides of a tear 28. They are simulated according to a normal dog-ear 27 in a corner.

The curved fold 29 actually is a dog-ear at an edge of the bank note that may occur due to the elasticity of the paper. Folds often show soil and shading along the folding line. A curved fold is simulated as a parabolic arc. The parameters for example include the position and the length of the fold as well as other geometric parameters defining the curvature of the fold.

Fig. 5d shows a virtual bank note with a simulated z-fold 30. Z-folds may occur when a bank note has two more or less parallel folds in the middle either vertically or horizontally. The z-fold 30 simulates a z-fold due to two more or less parallel vertical folds where one portion of the bank note is folded along the first vertical fold and then folded back along the second vertical fold. Since the two folds are not exactly parallel, the portions of the bank note are not exactly aligned, but show a small angle 31.

Fig. 5e shows a virtual bank note again with several defects: a frayed margin 32, two missing parts 33, 34 and a hole 35 inside the note. Generally, a new bank note has straight, clean edges. Due to the use of the bank note, small damages such as tiny tears or creases may occur along the edges. The edges may be frayed totally or only partially. Often soil occurs at frayed margins. Frayed margins are simulated as a 1D texture. They are for example modelled as a stochastic 1D texture. The modelling parameters include for example a sample 1D texture from the knowledge library.

A missing part may occur everywhere in a note. Often, a missing part is positioned at a corner of a bank note, such as the missing part 33. Such missing parts typically evolve from a fold that is similar to the fold from the dog-ear 27 as shown in fig. 5c.

A missing part such as the missing part 34 occurs due to a tear such as the tear 28 shown in fig. 5c. The difference is that the tear does not end within the note but runs from one edge of the bank note either to the same edge such as the tear from missing part 34 or to another edge such as the tear from missing part 33. Similarly, a hole 35 may occur inside the bank note.

A missing part or a hole may be simulated similarly to a tear. However, it seems advantageous to simulate them as a closed (for a hole) or an open (for a missing part) polygon that is for example modelled by a 1D stochastic texture synthesis. The parameters for example include a polygon from the 1D texture library and position parameters.

Fig. 5f shows a virtual bank note with a graffiti 36 and a stain 37. Graffiti 36 such as for example handwritings or figure fragments typically occur in unprinted regions of a note where a person for example tests a ball point pen or notes an important information. The colour and the orientation of the graffiti 36 are arbitrary. A graffiti 36 may for example be simulated by copying an example graffiti from the knowledge library 13, in which case the parameters include the graffiti itself. Alternatively or additionally a graffiti 36 can be simulated as a texture, for example modelled by a 2D stochastic texture synthesis algorithm, in which the parameters include for example those of the texture model extracted from the reference graffiti images.

A stain 37 such as for example a coffee stain is a local texture, that is a colour change in a delimited region of the bank note with an arbitrary shape and size. Stains may have different colours that differ from the original colour of the specific region of the bank note. Often, stains are more or less transparent such that the printings and the paper of the bank note show through. A stain is modelled as a closed polygon with a 2D texture, where the polygon may also include a part of one or more bank note edges. The parameters for simulating a stain may for example include a soil image from the 2D texture library, polygon from the 1D texture library and position parameters.

A bank not may also be soiled homogeneously (not shown). For example the colour of the bank note may change due to the use of the bank note. Typically, light regions change towards yellow or brown colour tones. Homogeneous soil is for example modelled as a 2D texture. The parameters for example include a soil image from the 2D texture library.

The colour change for partial and/or homogeneous soil is determined by means of colour physics that provides formulae how two colours are added or subtracted from each other. Here, the colour change is determined by adding the 2D texture according to the colour addition rules.

Crumpled bank notes (not shown) are simulated similarly to soiled bank notes, the crumpling is typically homogeneously distributed over the hole bank note and often occurs in combination with soil. Due to the crumpling, the printings on the bank note are geometrically distorted. Crumpling is simulated with a 2D stochastic texture synthesis where the crumpling is combined with homogeneous soil. The geometrical distortion is not considered. As with homogeneous soil, a 2D texture is added according to the rules for colour addition. The parameters include a crumpling image from the 2D texture library.

A further defect of a bank not is abrasion (not shown). It has been found that abrasion of a bank note changes the colour histogram of the affected region. Fig. 7 shows two colour histograms. Line 43 in the colour histogram 40.1 illustrates how the frequency of colour occurrence 41 of a new bank note depend on the colour intensities 42. Line 43 has for example a hump 43.1 at lower intensities. Line 44 in the colour histogram 40.2 illustrates this dependency for an older bank note that shows a certain abrasion. Due to abrasion, pixels with lower intensity become pixels with higher intensity. Therefore, the hump 43.1 from histogram 40.1 has moved to higher intensities shown as hump 44.1 in histogram 40.2. This abrasion effect is simulated based on a histogram matching: a sample abrasion histogram and a colour histogram of the reference bank note to be simulated are taken from the library. Then a colour transformation of the colour histogram of the reference note is carried out such that the new colour histogram is approximately equal to the sample abrasion histogram. In order to further improve the histogram matching, the original image is subdivided into several approximately homogeneous regions which are pasted together after histogram matching of each single region. The parameters include for example a sample colour histogram from the library.

Fig. 6 shows a further defect of a bank note: print-to-print variations. Usually, the printings on a bank note are applied in several stages where the different print layers are exactly aligned. Fig. 6a shows an example for a correct print subject 50 that is composed of two sub subjects, a writing 51 and a stamp 52 that are aligned centrally. However, sometimes one or several print layers may be displaced relative to another print layer. In order to simulate this defect, the printings on a reference bank note are first decomposed into the different print layers for example based on an adaptive thresholding and by means of colour addition and subtraction. Fig. 6b shows the separated print layers of the printing 50 of fig. 6a: the writing 51 and the stamp 52. Then, one or several print layers are shifted against one or several other print layers and then the shifted print layers are added again by means of colour physics. Fig. 6c shows a simulated print-to-print variation where the writing 51 and the stamp 52 are not aligned centrally but where the stamp writing 51 is displaced with respect to the stamp 52.

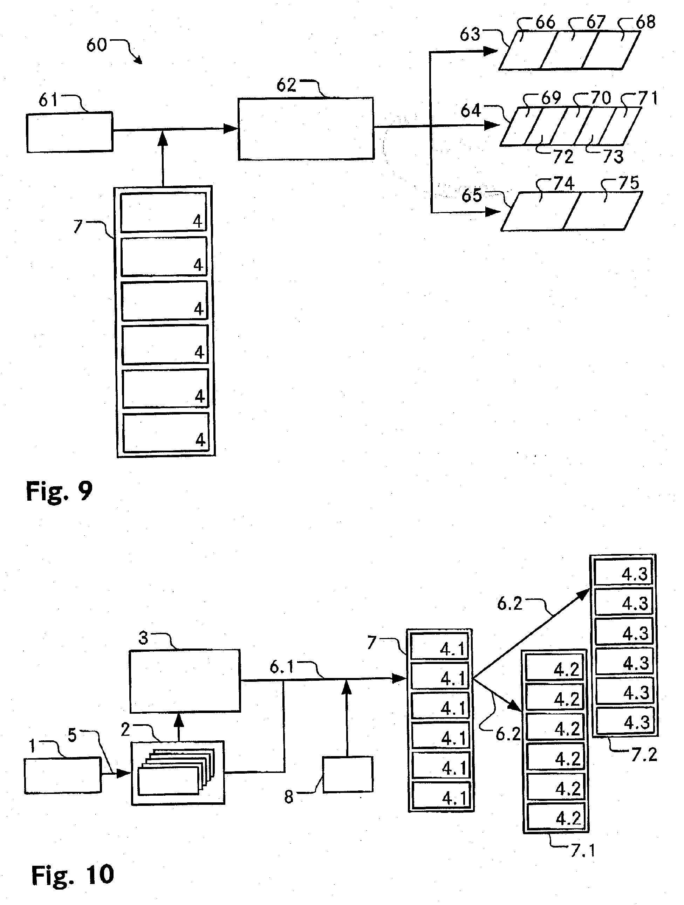

Fig. 9 shows a block diagram of a classifier 60, that is a device that is designed to classify real bank notes with respect to one or a plurality of given criteria such as for example authenticity, identity and/or fitness. The classifier may be for example a part of a cash handling system (not shown). The classifier 60 includes a reader 61 to scan a real bank note with one or a plurality of specific sensors. The reader generates an electronic representation of the scanned bank note and forwards it to a classification device 62. Based on the electronic representation, the classification device 62 classifies the real bank note according to the desired criteria. The classification includes a first criterion genuineness 63 that is whether the bank note is genuine 66, counterfeit 67 or suspicious 68. The classification includes two further decisions according to the criteria denomination 64 and fitness 65. The decision denomination 64 may for example include a decision about the actual value of the real bank note. The options are the different values 69, 70, 71, 72 and 73 that the bank notes of a specific currency may have. The criteria fitness 65 decides whether the scanned bank note is fit 74 for further use or unfit 75 in which case the bank note is retracted. Depending on the classification result, the scanned and examined real bank note is for example deposited in different receptacles.

In order to improve the reliability of the classifier 60, it has to be trained with a plurality of electronic representations of real bank notes. Instead of or additionally to the electronic representations obtained by scanning real bank notes, a plurality of electronic datasets 4 from the database 7 obtained by means of the invention may be used to train the classifier 60.

With the embodiment shown in fig. 1, the reference 1 is scanned with a sensor that corresponds to or is identical with the sensor in the classifier that shall later be trained with the electronic datasets 4. That is, the reference dataset 2 includes a sensor-dependent electronic representation of the reference 1 and the database 7 comprises a plurality of electronic datasets 4 representing defective virtual bank notes where the simulated defects depend of the specific sensor of the classifier to be trained. In these cases, the process according to the invention has to be rerun for every sensor that is used in a classifier. Fig. 10 shows a further embodiment of the invention. This embodiment generally corresponds to the embodiment shown in fig. 1. The differences are as follows: the reference 1 is scanned in a plurality of spectral regions wherefore the reference dataset 2 includes a multi-spectral representation of the reference. The step defect simulation 6.1 is modified such that the electronic datasets 4.1 are not sensor dependent, that is no sensor characteristics, for example spectral characteristics, are considered when the defects are simulated. For the sensor independent defect simulation, the a priori knowledge may include the same or other information. In order to generate the virtual bank notes to train a specific classifier, the raw electronic datasets 4.1 have to be modified again. In a step sensor modelling 6.2 different sets of sensor dependent electronic datasets 4.2, 4.3 may be obtained. Compared with the embodiment shown in fig. 1, this embodiment has the advantage that with only one set of raw electronic datasets 4.1 several sets 7.1, 7.2 of sensor dependent electronic datasets 4.2, 4.3 may be obtained in order to train two different classifiers having two different types of sensors.

In summary, it is to be noted that the invention enables the generation of a multitude of virtual bank notes in a fast, automated and cost effective way. This is accomplished by scanning one reference bank note and simulating one or a combination of different defects. These virtual bank notes may for example be used to train and test a bank note classifier to improve its reliability.

## Claims

1. Method for generating an electronic dataset (4) as a representation of a sheet-like object, said method including generating a reference dataset (2) by scanning a reference object (1), **characterised in that** said electronic dataset (4) is generated by simulating a physical defect (6) of the reference object (1) where said physical defect is simulated by applying mathematical methods to the reference dataset via electronic data processing.

2. Method according to claim 1, **characterised in that** said reference dataset (2) is generated by scanning a mint reference object (1) without any print irregularities.

3. Method according to claim 1 or 2, **characterised in that** both surfaces of the reference object are scanned.

4. Method according to any of claims 1 to 3, **characterised in that** said electronic dataset is generated as a representation of a bank note.

5. Method according to any of claims 1 to 4, **characterised in that** the physical defect is simulated based on an analysis (12) of a plurality of real sheet-like objects (10) having said defect.

6. Method according to any of claims 1 to 5, **characterised in that** at least one of the following defects is simulated:
a) a sheet-like object with a dog ear (27);
b) a sheet-like object with a fold (30);
c) a sheet-like object where a printing on a surface of the object is displaced in relation to an edge of the object;
d) a sheet-like object with a hole (35);
e) a sheet-like object with a missing part of an edge of the object (34);
f) a sheet-like object where a printing on a surface of the object is displaced in relation to another printing on said surface of the object (51, 52);
g) a sheet-like object with graffiti (36) on a surface;
h) a uniformly soiled sheet-like object;
i) a locally soiled sheet-like object;
j) a sheet-like object with a stain (37);
k) a sheet-like object with a frayed edge (32);
l) a sheet-like object with a tear (28);
m) a sheet-like object with a patched tear;
n) a crumpled sheet-like object;
o) a sheet-like object showing abrasion.

7. Method according to any of claims 1 to 6, **characterised in that** a device (60) for classifying a real sheet-like object is trained with said electronic dataset (4).

8. Method according to claim 7, **characterised in that** classifying said real sheet-like object includes a step of scanning said real sheet-like object with a sensor, where the electronic dataset is generated depending on said sensor.

9. Method according to any of claims 1 to 8, **characterised in that** the reference object is scanned in a plurality of spectral regions to enable a sensor-independent representation of the sheet-like object.

10. Method according to any of claims 1 to 9, **characterised in that** a plurality of electronic datasets (4) is generated by simulating a plurality of physical defects.

11. Arrangement for generating an electronic dataset (4) as a representation of a sheet-like object, said arrangement including means for generating a scan of a reference object (1) and means for generating a reference dataset (2) from said scan, **characterised in that** the arrangement includes means for simulating a physical defect (6.1) of the reference object where said means for simulating a physical defect include means for applying mathematical methods to the reference dataset via electronic data processing.

12. Arrangement according to claim 12, **characterised in that** it includes a device (60) for classifying (62) a real sheet-like object and means for training said device with said electronic dataset.

13. Electronic dataset (4) as a representation of a sheet-like object, **characterised in that** it is generated with the method according to any of claims 1 to 10.

14. Method for training a device (60) for classifying real bank notes with respect to one or a plurality of given criteria, **characterised in that** the device is trained with a plurality of electronic datasets (4) generated according to claim 13.

15. Device (60) for classifying real bank notes with respect to one or a plurality of given criteria, **characterised in that** the device has been trained according to the method of claim 14.
